# EUROPEAN PATENT APPLICATION

(11) **EP 1 280 217 A2**
(43) Date of publication of application: **29.01.2003**
(21) Application number: 02011674.5
(22) Date of filing: 31.05.2002
(51) Int. Cl.: H01M 8/02

(54) **Fuel-cell separator, production of the same, and fuel cell**

(30) Priority: 26.07.2001 JP 2001226450
(71) Applicant: MATSUSHITA ELECTRIC INDUSTRIAL CO., LTD., Kadoma-shi, Osaka 571-8501 (JP)
(72) Inventor: Kawashima, Tsutomu, Ikoma-shi, Nara 630-0121 (JP); Fukushima, Tetsuo, Katano-shi, Osaka 576-0041 (JP)
(74) Representative: VOSSIUS & PARTNER

(57) **Abstract**

A fuel-cell separator is formed with a mixture composition of a thermoplastic resin and graphite particles and is provided with grooves for moving fluid, and has a gas permeability coefficient in a range of not less than 1×10⁻¹⁶mol/m·Pa·s and not more than 1×10⁻¹⁴mol/m·Pa·s, a volume specific electric resistance in the thickness direction in a range of not less than 1 mΩ·cm and not more than 50 mΩ·cm, and a density in a range of not less than 1.8g/cm³ and not more than 2.1g/cm³, which is uniform throughout the grooves and ribs between the grooves. The molding (2) is carried out by preheating a die to a temperature not lower than a melting point of the thermoplastic resin (6), filling the mixture composition (1) in a heated state into a cavity of the die, melting and compressing the mixture composition uniformly at a predetermined pressure for forming, and cooling the same to a temperature lower than a heat deflection temperature of the thermoplastic resin while the pressure remains applied to the die. This provides a fuel-cell separator having a high conductivity, high uniformity of quality in grooves and ribs, a great strength, and a shorter molding cycle time, provides a method for producing the foregoing separator, and provides a fuel cell employing the foregoing separator.

## Description

The present invention relates generally to a fuel-cell separator obtained by forming a mixture composition of graphite and a thermoplastic resin in a desired shape, a method for producing the same, and a fuel cell.

A fuel cell, for instance, a solid polymer electrolyte fuel cell, is configured so as to simultaneously generate current and heat by electrochemically reacting a fuel gas containing hydrogen and a fuel gas containing oxygen such as air. The configuration is as follows. On both sides of a polymer electrolyte film that selectively transfers hydrogen ions, catalyst reactive layers are formed, which contain carbon powder carrying a platinum-based metal catalyst as a principal component. On outer surfaces of the catalyst reactive layers, diffusion layers with fuel gas permeability and electron conductivity are formed. The diffusion layers and the catalyst reactive layers constitute electrodes.

Then, in order to prevent the fuel gases supplied thereto from leaking to the outside and to prevent the two types of fuel gases from mixing, a gas sealing member or a gasket is provided around each electrode with a polymer electrolyte film interposed therebetween. The sealing member or the gasket has been incorporated integrally with the electrode and the polymer electrolyte film, and they constitute a membrane electrode assembly (hereinafter referred to as MEA). On outer surfaces of the MEAs, conductive separator plates are provided, for mechanically fixing the MEAs and electrically connecting adjacent MEAs with each other in series. At portions of the separator plates in contact with the MEAs, gas passageways are formed for supplying the reactive gases to the electrode faces and taking away generated gases and excess gases. Though the gas passageways may be provided separately from the separator plates, generally grooves are provided on surfaces of the separators so as to constitute the gas passageways. In such a solid polymer electrolyte fuel cell, the separator has to have high conductivity, high gas sealing ability with respect to the fuel gases, and high corrosion resistance against the reaction upon the reduction and oxidation of hydrogen/oxygen.

For these reasons, the conventional separator is produced by forming a resin such as a phenol resin alone or a kneaded mixture of the same with carbon powder in a plate shape, carbonizing or graphitizing the plate in a non-oxygen atmosphere so as to form a carbon-based or graphite-based plate, and then forming grooves serving as gas passageways on surfaces of the plate by cutting or the like. However, since such a separator needs a heat treatment at 2000°C or higher, and moreover, since the gas passageways are formed by cutting, the production cost rises.

To cope with this, WO 99/49530 discloses a method for producing a separator by injection molding or compression molding of a composition containing a thermosetting resin such as a phenol resin and a conductive agent such as graphite particles. However, in the case where a separator is produced by compression molding of the foregoing mixture composition containing graphite particles and a thermosetting resin such as a phenol resin, the thermosetting resin requires a curing time of approximately 5 minutes, thereby increasing the molding cycle time. Therefore, it is difficult to improve the productivity. Besides, in the case where a separator is produced by injection molding of a mixture composition of graphite particles and a thermosetting resin such as a phenol resin, it is necessary to increase the content of the thermosetting resin so as to ensure the flowability of the mixture composition. This results in the separator having insufficient conductivity.

Another method proposed is a method for producing a desired separator by forming a resin composition containing graphite particles and a thermoplastic resin into a sheet form and subjecting the obtained sheet to stamping employing a grooved die (JP 2001-122677A). However, in this method, first of all, it is difficult to form a resin composition containing a high proportion of graphite particles in a sheet form. Besides, stamping causes compressed portions (groove portions) and insufficiently compressed portions (portions other than the groove portions, i.e., rib portions) to be formed in the obtained separator. Therefore, the separator is unstable in strength and has deflection, and hence, tends to crack. Furthermore, the insufficiently compressed portions (portions other than the groove portions, i.e., rib portions) have a lower density, thereby tending to permeate gases. Furthermore, in the case where a separator is formed by subjecting a sheet to stamping, it is impossible to form grooves having sharp corners.

Therefore, to solve the foregoing problems of the prior art, it is an object of the present invention to provide a fuel-cell separator with a high conductivity, an increased strength, and grooves having sharp corners, which is produced with a short molding cycle time and a high productivity at a low cost, to provide a method producing the same, and to provide a fuel cell.

To achieve the foregoing object, a fuel-cell separator of the present invention is formed with a mixture composition of a thermoplastic resin and graphite particles and is provided with grooves for moving the fluid, and the fuel-cell separator has:
a gas permeability coefficient in a range of not less than 1×10⁻¹⁶ mol/m·Pa·s and not more than 1×10⁻¹⁴ mol/m·Pa·s;
a volume specific electric resistance in the thickness direction in a range of not less than 1 mΩ·cm and not more than 50 mΩ ·cm; and
a density in a range of not less than 1.8 g/cm³ and not more than 2.1 g/cm³, which is uniform throughout the grooves and ribs between the grooves.

In the foregoing description, "a density ... is uniform" means that there is substantially no difference in density. Here, "substantially no difference in density" means that a difference in density is within a range of plus/minus 10% from a prescribed value.

Next, a method of the present invention for producing a fuel-cell separator is a fuel-cell separator producing method in which a mixture composition of graphite particles and a thermoplastic resin is formed in a predetermined fuel-cell separator shape, and the method includes the steps of:
(a) preheating a grooved die to a temperature not lower than a melting point of the thermoplastic resin;
(b) filling the mixture composition into a cavity of the die;
(c) forming the mixture composition by compressing the same in a molten state uniformly at a predetermined pressure; and
(d) molding the mixture composition by cooling the same in the die to a temperature lower than a heat deflection temperature of the thermoplastic resin while the pressure remains applied thereto.

In the foregoing description, "compressing the same ... uniformly" means compressing the same so that the groove bottom portions and the rib portions have substantially no difference in density.

Next, a fuel cell of the present invention includes membrane electrode assemblies (MEAs) and separators provided outside each of the MEAs, each MEA having a polymer film, platinum-based catalyst layers on both sides of the polymer film, and diffusion layers provided on outer faces of the catalyst layers, the diffusion layers having gas permeability and electronic conductivity. Each separator is formed with a mixture composition of a thermoplastic resin and graphite particles and is provided with grooves for carrying the fluid, and the fuel-cell separator has:
a gas permeability coefficient in a range of not less than 1×10⁻¹⁶ mol/m·Pa·s and not more than 1×10⁻¹⁴ mol/m·Pa·s;
a volume specific electric resistance in the thickness direction in a range of not less than 1 mΩ ·cm and not more than 50 mΩ·cm; and
a density in a range of not less than 1.8 g/cm³ and not more than 2.1 g/cm³, the density being uniform throughout the grooves and ribs between the grooves.

FIGS. 1A to 1C are cross-sectional views schematically illustrating a process of manufacturing a fuel-cell separator according to one embodiment of the present invention.
FIGS. 2A to 2C are cross-sectional views illustrating an example of the step shown in FIG. 1B.
FIG. 3 is a perspective view of a fuel cell unit in which a separator according to one embodiment of the present invention is incorporated.
FIG. 4 is a perspective view schematically illustrating a stacking structure of a fuel cell according to one embodiment of the present invention.
FIG. 5 is a cross-sectional view schematically illustrating an action of a membrane electrode assembly (MEA) in the vicinity of a polymer film in a fuel cell according to one embodiment of the present invention.
FIG. 6 is a graph illustrating current-voltage characteristics of a solid polymer electrolyte fuel cell in Example 6 of the present invention.

A fuel-cell separator of the present invention is characterized by having a density in a range of not less than 1.8 g/cm³ and not more than 2.1 g/cm³, and a uniform density throughout its groove portions and its rib portions. In other words, the groove portions and the rib portions have substantially no difference in density. Therefore, in the groove portions and the rib portions, the strength, the gas permeability coefficient, and the volume specific electric resistance in the thickness direction are uniform, without any substantial difference.

The uniform structure can be produced by a process of: preheating a die to a temperature above a melting point of the thermoplastic resin; filling the mixture composition in a heated state into a cavity of the foregoing die; and forming the mixture composition in a molten state while uniformly compressing the same under a prescribed pressure, then cooling the same to a temperature lower than a heat deflection temperature of the thermoplastic resin while continuously applying the pressure to the die, so as to mold the same. With this, a fuel-cell separator that can be produced with a shorter molding time at a low cost can be provided.

The heat deflection temperature is a heat deflection temperature under a load condition of 0.45 MPa measured by the measuring method according to the standards of American Society for Testing and Materials (ASTM) D648. For instance, polypropylene (melting point: 160 to 165°C) has a heat deflection temperature of approximately 120°C. Polyphenylene sulfide (melting point: 280 to 290°C) has a heat deflection temperature of approximately 260°C. Considering the yield, the cooling temperature is more preferably not less than 40°C lower than the heat deflection temperature. However, in the case where the cooling temperature is excessively low, the molding cycle time is increased, thereby lowering the productivity, which is not desirable. To achieve sufficient yield and productivity both, the cooling temperature is preferably in a range of not lower than approximately (heat deflection temperature - 60°C) and not higher than approximately (heat deflection temperature - 40°C).

The foregoing fuel-cell separator in a plate shape is preferably provided with gas passageways on both surfaces thereof.

The foregoing fuel-cell separator preferably is compressed uniformly in a molten state for forming, and is cooled for molding.

The density of the foregoing fuel-cell separator preferably is in a range of not less than 1.9 g/cm³ and not more than 2.0 g/cm³.

Next, in the method according to the present invention, in the foregoing step (b), the mixture composition preheated to above the melting point of the thermoplastic resin may be filled in the die cavity.

The mixture composition preferably is molded in a predetermined fuel-cell separator shape by transferring the die to the steps (a), (b), and (c) in the stated order successively. This is because the production is performed with a shorter molding cycle time and with an improved efficiency.

As a material for the separator, a mixture composition of graphite particles and a thermoplastic resin is used. The graphite particles mean graphitic or carbonic particles, and do not necessarily have a graphite structure as long as it has a high conductivity. However, it is preferable that the particles have a graphite structure with a high crystallinity. Examples of such graphite particles include, for instance, artificial graphite, natural graphite, and expanded graphite. One type of the graphite particles may be used alone or two or more types may be used in combination. Though the size of the graphite particles is not particularly limited, the mean particle diameter thereof preferably is 50 to 120 µm to obtain a higher conductivity. Examples of the thermoplastic resin include polyphenylene sulfide resins, polyarylate resins, polysulfone resins, polyether sulfone resins, polyphenylene ether resins, polyether ether ketone resins, polyolefin resins, polyester resins, polycarbonate resins, polystyrene resins, acrylic resins, polyamide resins, fluorocarbon resins, and liquid crystal polymers. Among these thermoplastic resins, polyphenylene sulfide resins or polypropylene resins are preferred because they have high chemical resistance, durability, and mechanical strength.

The content of the thermoplastic resin contained in the mixture composition preferably is not less than 10 wt% and not more than 30 wt% with respect to a total quantity of the graphite particles and the thermoplastic resin. If the content of the thermoplastic resin is less than 10 wt% with respect to the total quantity, the separator has a decreased strength, while if the content is more than 30wt% with respect to the total quantity, the conductivity decreases, thereby making it difficult to secure the characteristics as a separator.

The following will describe a method for producing a fuel-cell separator according to the present invention, while referring to the drawings.

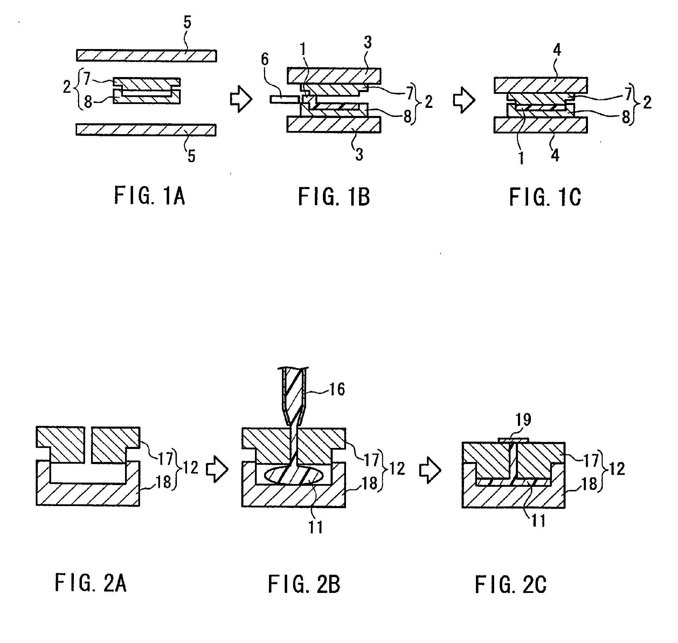

FIGS. 1A to 1C are cross-sectional views illustrating a production process according to one embodiment of the present invention.

In the case where the aforementioned mixture composition composed of graphite particles and a thermoplastic resin is formed, a die 2 composed of a cope 7 and a drag 8 is heated to above the melting point of the thermoplastic resin by a heater 5 beforehand, as shown in FIG. 1A. The temperature for preheating the die is a prescribed temperature above the melting point of the thermoplastic resin, but from the viewpoint of shortening the molding cycle time, the die preferably is preheated to a temperature in a range of not lower than the melting point, and not higher than the melting point + 50°C. If the temperature of the die is lower than the melting point of the thermoplastic resin, the thermoplastic resin in the mixture composition is solidified where it is in contact with the die when the mixture composition is filled in the die, and this makes it difficult to mold the composition into a prescribed separator shape. As a heater for heating the die, an electric resistance furnace, or an electromagnetic induction furnace, for instance, may be used.

Next, as shown in FIG. 1B, the mixture composition 1 is filled into a cavity of the die 2 maintained to be above the melting point of the thermoplastic resin by means of hot plates 3 equipped with a heating mechanism. The mixture composition 1 is filled in a state of being heated to above the melting point of the thermoplastic resin, by a supply apparatus 6 for filling the mixture composition, which is equipped with a heating mechanism. Thereafter, a molding pressure of 100 to 1000 kg/cm² is applied thereto.

Next, as shown in FIG. 1C, the mixture composition 1 filled in the die 2 is cooled to a temperature lower than the melting point of the thermoplastic resin by a cool plate 4 equipped with a cooling mechanism under a predetermined pressure. The pressure normally is 100 to 1000 kg/cm². The cooling conditions vary depending on the type of the thermoplastic resin, but with the cooling to the above-described heat deflection temperature, preferably a temperature 40°C lower than the heat deflection temperature, heat deflection does not occur. For instance, in the case where a polyphenylene sulfide resin is used as a thermoplastic resin, it preferably is cooled to approximately 100 to 220°C. This is because if it is cooled to a temperature exceeding 220°C, there is a possibility that a molded product is deflected when taken out of a die, while if it is cooled to a temperature lower than 100°C, the molding cycle time increases.

Thereafter, the molded product is taken out of the cooling device.

Through the foregoing process, the mixture composition 1 of the graphite particles and the thermoplastic resin is formed in a predetermined separator shape so that substantially no difference in density is present in the thickness direction.

FIGS. 2A to 2C are cross-sectional views illustrating an example of the step shown in FIG. 1B. As shown in FIG. 2A, a cope 17 of a die 12 is positioned at a distance corresponding to a predetermined compression stroke from the drag 18. Then, as shown in FIG. 2B, a predetermined quantity of a mixture composition 11 in a molten state is filled in a cavity of the die 12 by a supply apparatus 16. Subsequently, as shown in FIG. 2C, the die 12 is closed with a cap 19, and the mixture composition 11 is compressed at a predetermined pressure, so as to be formed.

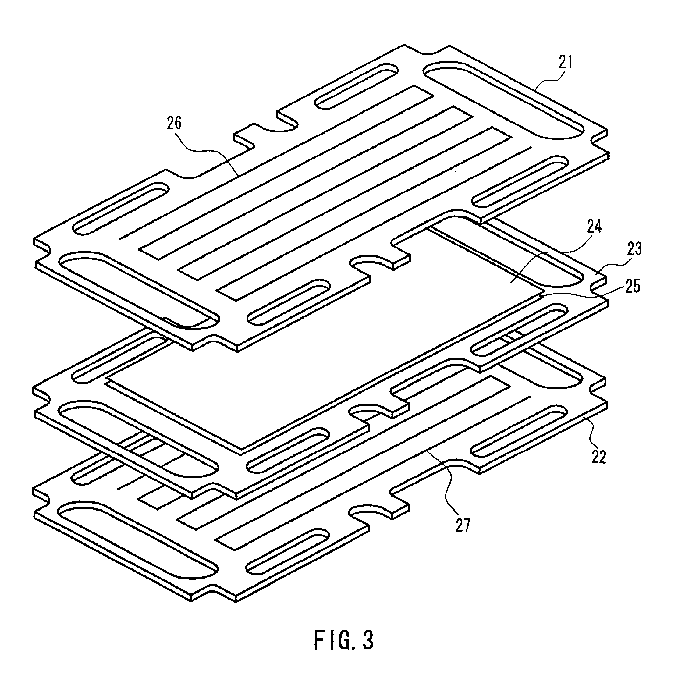

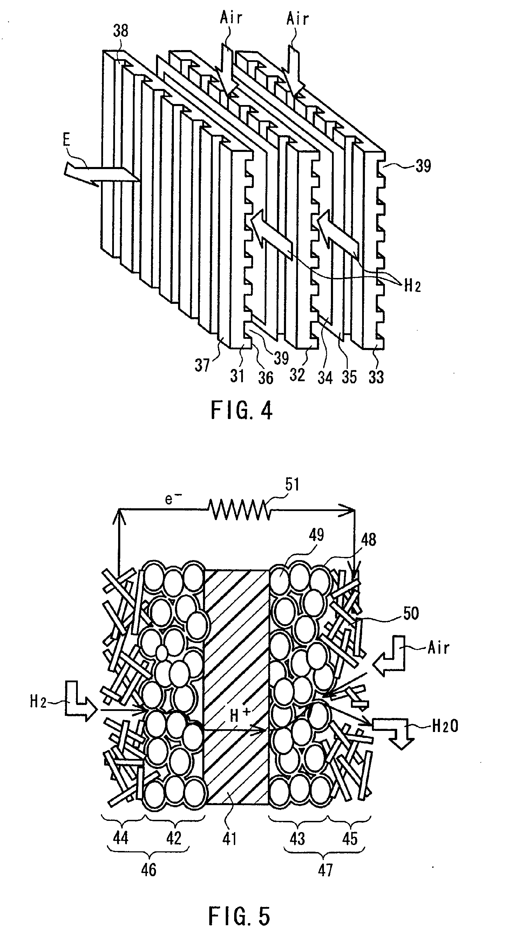

FIG. 3 is a perspective view illustrating a fuel cell unit in which separators 21 and 22 obtained in one embodiment of the present invention are incorporated. Gas diffusion layers 24 and 25 placed on a gasket 23 are provided between the separators 21 and 22. Between the gas diffusion layers 24 and 25, a polymer film having catalyst layers on both sides thereof is interposed, as shown in FIGS. 4 and 5, which will be described layer. It should be noted that grooves 26 and 27 are provided on both sides of each of the separators 21 and 22. Though the grooves 26 and 27 are indicated schematically with lines in FIG. 3, actually a plurality of the same are formed as shown in FIG. 4.

Next, FIG. 4 is a perspective view schematically illustrating a stack structure of a fuel cell according to one embodiment of the present invention. Polymer films 35, each of which is sandwiched by fuel electrodes 34, are provided between separators 31, 32, and 33, each of which is provided with grooves on both sides thereof. Hydrogen (H₂) is supplied to grooves 39 of the separators from a front side in a horizontal direction, while air is supplied to groove 38 of the separators from an upper side in a vertical direction. Current flows in a thickness direction of the separator.

Here, focusing on the separator 31, an important point to be noted is that current flows from surfaces 36 of projection portions on one side to surfaces 37 of projection portions on the other side. A separator for the present invention has substantially no difference in density in the thickness direction, and therefore has a uniform conductivity, thereby allowing current to pass therethrough easily. However, in a separator obtained by the conventional method of compressing a sheet, groove portions have a higher density while projection portions have a lower density, thereby decreasing the conductivity of the projection portions through which current is to pass. Besides, it is important that the separator 31 should surely separate hydrogen passing through the grooves 39 and air passing through the grooves 38 from each other.

In the separator of the present invention, both of the groove portions (recesses) and the projection portions are sufficiently compressed, and have a uniform density. Therefore, the separator is capable of separating hydrogen and air from each other sufficiently. However, in a separator formed by a conventional method of compressing a sheet, projection portions have a lower density, therefore causing a problem of cross-leaking of hydrogen and air.

FIG. 5 is a cross-sectional view schematically illustrating an effect of a membrane electrode assembly (MEA) portion in the vicinity of a polymer film of a fuel cell according to one embodiment of the present invention. Catalyst layers 42 and 43 are formed on both sides of a polymer film 41. Carbon non-woven fabric 50 is laminated on an outer surface of the catalyst layer 42 so as to serve as a gas diffusion layer 44, and the catalyst layer 42 and the gas diffusion layer 44 constitute a negative fuel electrode 46. On the other hand, a carbon non-woven fabric 50 is laminated on an outer surface of the catalyst layer 43 so as to serve as a gas diffusion layer 45, and the catalyst 43 and the gas diffusion layer 45 constitute a positive air electrode 47.

As the polymer film 41, a sulfo-group-transduced perfluorosulfonic acid film ("Nafion" (registered trademark) manufactured by El du Pont) is used, for instance. As the catalyst layers 42 and 43, carbon particles 49 to whose surfaces a platinum-based catalyst 48 is made to adhere are used, for instance.

Hydrogen (H₂) is supplied from a gas diffusion layer 44, passes the catalyst layer 42, and becomes a hydrogen ion (H⁺) when passing the polymer film 41, and then at the catalyst layer 43, chemically bonded with oxygen (O₂) in air supplied from the gas diffusion layer 45 thereby becoming water (H₂O), which is removed downward outside the gas diffusion layer 45. Through the foregoing chemical reactions in series, electrons (e⁻) flow from the fuel electrode 46 to the air electrode 47. 51 denotes an electric resistor. This basic principle per se is well known.

As described above, according to the present invention, it is possible to provide a fuel-cell separator having a high conductivity, high uniformity of quality in grooves and ribs, a great strength, and a shorter molding cycle time, to provide a method for producing the foregoing separator, and to provide a fuel cell employing the foregoing separator.

### Examples

The following will describe the present invention while referring to examples. The present invention, however, is not limited by these examples at all.

### Examples 1 to 3

An artificial graphite powder (manufactured by SEC Corp., SGP grade, mean particle diameter: 50µm) as graphite particles, and a polyphenylene sulfide resin PPS (powder of "Torelina" (registered trademark) manufactured by Toray Industries, Inc., melting point: approximately 278°C) as a thermoplastic resin, were mixed at a ratio shown in Table 1 over 15 minutes by a mixer, so as to produce a mixture as a material for a separator.

This mixture was formed in a prescribed separator shape in the following manner.

First of all, in a preheating furnace whose temperature was maintained at 320°C, a die (material: HPM31 manufactured by Hitachi Metals, Ltd., outer size: 300 mm in length x 200 mm in width × 50 mm in thickness, mold product cavity form: 250 mm in length × 150 mm in width × 2 mm in thickness, with a plurality of gas passageways formed on both sides, which were formed with grooves (recesses) having a depth of 0.5 mm and a width of 1 mm, and ribs (projections) having a width of 2 mm) was preheated to 320°C.

Next, the die preheated to 320°C was transferred to a hydraulic press (manufactured by TANAKA KAME CO., LTD., clamping power: 200 tons) equipped with an extruder and hot plates (heater capacity: 6 kW as to each of the press upper plate and the press lower plate) whose temperature was maintained at 320°C, and after the die was filled with the foregoing mixture in which PPS was molten at a temperature of 320°C, a molding pressure of 400 kg/cm² was applied thereto. The time required for this filling step was 20 seconds.

Finally, the die was transferred to a hydraulic press (manufactured by TANAKA KAME CO., LTD., clamping power: 200 tons) equipped with cold plates (cooling water: 50 liter/min as to each of the press upper plate and the press lower plate) whose temperature was maintained at 20°C, and was cooled to 200°C while the molding pressure of 400 kg/cm² was applied. The time required for this cooling step was 40 seconds.

In this process, a plurality of dies were used and were transferred one by one successively to each step. As a result, a molding cycle time of 60 seconds was achieved.

The size of the obtained molded products as separators was 250 mm in length × 150 mm in width × 2 mm in thickness, and each was provided with a plurality of gas passageways on both sides, which were formed with grooves (recesses) having a depth of 0.5 mm and a width of 1 mm, and ribs (projections) having a width of 2 mm. The grooves (recesses) and ribs (projections) had shapes having sharp corners. The grooves (recesses) and ribs (projections) of the obtained molded product as a separator were uniform, with no bulk density difference and no difference in the volume specific electric resistance in the thickness direction.

The characteristics and molding cycle times of the produced separators are shown in Table 1.

### Example 4

The mixture produced in the same manner as in Example 1 was formed in a prescribed separator shape in the following manner.

First of all, in a preheating furnace whose temperature was maintained at 320°C, a die (material: HPM31 manufactured by Hitachi Metals, Ltd., outer size: 300 mm in length × 200 mm in width x 50 mm in thickness, mold product cavity form: 250 mm in length × 150 mm in width × 2 mm in thickness, with a plurality of gas passageways formed on both sides, which were formed with grooves (recesses) having a depth of 0.5 mm and a width of 1 mm, and ribs (projections) having a width of 2 mm) was preheated to 320°C.

Next, the die preheated to 320°C was transferred to a hydraulic press (manufactured by TANAKA KAME CO., LTD., clamping power: 200 tons) equipped with a powder charging mechanism and hot plates (heater capacity: 6 kW as to each of the press upper plate and the press lower plate) whose temperature was maintained at 320°C, and after the die was opened and the mixture in a powder state was put therein and squeezed, the die was closed and a molding pressure of 400 kg/cm² was applied thereto. The time required for this charging step was 30 seconds.

Finally, the die was transferred to a hydraulic press (manufactured by TANAKA KAME CO., LTD., clamping power: 200 tons) equipped with cold plates (cooling water: 50 liter/min as to each of the press upper plate and the press lower plate) whose temperature was maintained at 20°C, and was cooled to 200°C while the molding pressure of 400 kg/cm² was applied. The time required for this cooling step was 40 seconds.

In this process, a plurality of dies were used and were transferred one by one successively to each step. As a result, a molding cycle time of 60 seconds was achieved.

The size of the obtained molded product as a separator was 250 mm in length × 150 mm in width × 2 mm in thickness, and was provided with a plurality of gas passageways on both sides, which were formed with grooves (recesses) having a depth of 0.5 mm and a width of 1 mm, and ribs (projections) having a width of 2 mm. The grooves (recesses) and ribs (projections) had sharp shapes. The grooves (recesses) and ribs (projections) of the obtained molded product as a separator were uniform, with no bulk density difference and no difference in the volume specific electric resistance in the thickness direction.

The characteristics and molding cycle time of the produced separator are shown in Table 1.

### Example 5

An artificial graphite powder (manufactured by SEC Corp., SGP grade, mean particle diameter: 50µm) as graphite particles, and polyphenylene (hereinafter referred to as PP, manufactured by Grand Polymer Co., Ltd., J105H) as a thermosetting resin, were mixed at a ratio shown in Table 1 over 15 minutes by a mixer, so as to produce a mixture as a material for a separator.

This mixture was formed in a prescribed separator shape in the following manner.

First of all, in a preheating furnace whose temperature was maintained at 220°C, a die (material: HPM31 manufactured by Hitachi Metals, Ltd., outer size: 300 mm in length × 200 mm in width × 50 mm in thickness, mold product cavity form: 250 mm in length × 150 mm in width × 2 mm in thickness, with a plurality of gas passageways formed on both sides, which were formed with grooves (recesses) having a depth of 0.5 mm and a width of 1 mm, and ribs (projections) having a width of 2 mm) was preheated to 220°C.

Next, the die preheated to 220°C was transferred to a hydraulic press (manufactured by TANAKA KAME CO., LTD., clamping power: 200 tons) equipped with an extruder and hot plates (heater capacity: 6 kW as to each of the press upper plate and the press lower plate) whose temperature was maintained at 220°C, and after the die was filled with the foregoing mixture in which PP was molten at a temperature of 220°C, a molding pressure of 400 kg/cm² was applied thereto. The time required for this filling step was 20 seconds.

Finally, the die was transferred to a hydraulic press (manufactured by TANAKA KAME CO., LTD., clamping power: 200 tons) equipped with cold plates (cooling water: 50 liter/min as to each of the press upper plate and the press lower plate) whose temperature was maintained at 20°C, and was cooled to 80°C while the molding pressure of 400 kg/cm² was applied. The time required for this cooling step was 50 seconds.

In this process, a plurality of dies were used and were transferred one by one successively to each step. As a result, a molding cycle time of 60 seconds was achieved.

The size of the obtained molded product as a separator was 250 mm in length × 150 mm in width × 2 mm in thickness, and was provided with a plurality of gas passageways on both sides, which were formed with grooves (recesses) having a depth of 0.5 mm and a width of 1 mm, and ribs (projections) having a width of 2 mm. The grooves (recesses) and ribs (projections) had sharp corners and edges. The grooves (recesses) and ribs (projections) of the obtained molded product as a separator were uniform, with no bulk density difference and no difference in the volume specific electric resistance in the thickness direction.

The characteristics and molding cycle time of the produced separator are shown in Table 1.

### Comparative Example 1

An artificial graphite powder (manufactured by SEC Corp., SGP grade, mean particle diameter: 50µm) as graphite particles, and a phenol resin (manufactured by Sumitomo Durez Co., Ltd.) as a thermosetting resin, were mixed at a ratio of 80 percent by weight (wt%) of the graphite powder versus 20 wt% of the phenol resin over 15 minutes by a mixer, so as to produce a mixture as a material for a separator.

This mixture was filled in a die (material: HPM31 manufactured by Hitachi Metals, Ltd., outer size: 300 mm in length × 200 mm in width × 50 mm in thickness, mold product cavity form: 250 mm in length × 150 mm in width × 2 mm in thickness, with a plurality of gas passageways formed on both sides, which were formed with grooves (recesses) having a depth of 0.5 mm and a width of 1 mm, and ribs (projections) having a width of 2 mm), which was heated to be 180°C. The time required for this filling step was 15 seconds.

Next, the die was transferred to a hydraulic press (manufactured by TANAKA KAME CO., LTD., clamping power: 200 tons) equipped with hot plates (heater capacity: 6 kW as to each of the press upper plate and the press lower plate) whose temperature was maintained at 180°C, and a molding pressure of 400 kg/cm² was applied thereto, so that the phenol resin was cured. The time required for this cooling step was 300 seconds.

Molding cycle time of this process was measured, and consequently it was found to be 320 seconds. The characteristics and molding cycle time of the produced separator are shown in Table 1.

### Comparative Example 2

An artificial graphite powder (manufactured by SEC Corp., SGB grade, mean particle diameter: 50µm) as graphite particles, and a phenol resin (manufactured by Sumitomo Durez Co., Ltd.) as a thermosetting resin, were mixed at a ratio of 70 wt% of the graphite powder versus 30 wt% of the phenol resin over 15 minutes by a mixer, so as to produce a mixture as a material for a separator.

This mixture, heated to be 170°C, was subjected to injection molding with a die (material: HPM31 manufactured by Hitachi Metals, Ltd., outer size: 300 mm in length × 200 mm in width × 50 mm in thickness, mold product cavity form: 250 mm in length × 150 mm in width × 2 mm in thickness, with a plurality of gas passageways formed on both sides, which were formed with grooves (recesses) having a depth of 0.5 mm and a width of 1 mm, and ribs (projections) having a width of 2 mm) heated to be 180°C. 90 seconds later, the die was opened and a molded product was taken out.

The characteristics and molding cycle time of the produced separator are shown in Table 1.

**Table 1**

| Ex. No. Comp. Ex. No. | Mixture | | Molded Product | | | | | |
|---|---|---|---|---|---|---|---|---|
| | Resin Type | Content of Resin (wt%) | Bulk Density (g/cm³) | Volume Specific Resistance in Thickness Direction (mΩ·cm) | Flexural Strength (MPa) | Gas Permeability Coefficient (mol/m·Pa·s) | Warpage (µm) | Molding Cycle Time when plural dies were used (second) |
| Ex. 1 | PPS | 20 | 1.95 | 16 | 50 | 2.9×10⁻¹⁵ | 50 | 60 |
| Ex. 2 | PPS | 10 | 1.98 | 8 | 45 | 5.6×10⁻¹⁵ | 47 | 60 |
| Ex. 3 | PPS | 30 | 1.94 | 20 | 62 | 1.1×10⁻¹⁵ | 52 | 60 |
| Ex.4 | PPS | 20 | 1.96 | 15 | 52 | 2.4×10⁻¹⁵ | 48 | 60 |
| Ex.5 | PP | 20 | 1.81 | 20 | 47 | 4.9×10⁻¹⁵ | 45 | 70 |
| Comp. Ex. 1 | Phenol | 20 | 1.88 | 16 | 50 | 5.9×10⁻¹⁵ | 80 | 320 |
| Comp. Ex. 2 | Phenol | 30 | 1.84 | 30 | 40 | 5.1×10⁻¹⁵ | 130 | 90 |

As seen in Table 1, though a separator superior in the conductivity and strength was obtained in Comparative Example 1, it had a long molding cycle time and a relatively great warpage. Furthermore, though a separator obtained in Comparative Example 2 had a shorter molding cycle time than that in Comparative Example 1, the content of the resin was high, which led to a problem in the conductivity. Besides, it had a great warpage, therefore not satisfying the requirements of the separator. In contrast, it was confirmed that the separators in Examples had superior conductivity, gas non-permeability, and strength, and moreover, they had a considerably shortened molding cycle time.

### Comparative Example 3

An artificial graphite powder (manufactured by SEC Corp., SGP grade, mean particle diameter: 50µm) as graphite particles, and a polyphenylene sulfide resin PPS (powder of "Torelina" (registered trademark) manufactured by Toray Industries, Inc., melting point: approximately 278°C) as a thermoplastic resin, were mixed at a ratio of 70 wt% of the former versus 30 wt% of the latter over 15 minutes by a mixer, so as to produce a mixture as a material for a separator.

This mixture was formed in a prescribed separator shape in the following manner.

First of all, as a first step, the mixture was subjected to pressure molding with upper and lower flat hot plates whose temperature was maintained at 320°C, so as to form a sheet in a size of 250 mm in length × 150 mm in width × 2 mm in thickness, and the sheet was cooled to room temperature.

Next, as a second step, the sheet obtained in the first step, preheated to 200°C, was placed in a cavity of a die (material: HPM31 manufactured by Hitachi Metals, Ltd., outer size: 300 mm in length × 200 mm in width × 50 mm in thickness, mold product cavity form: 250 mm in length × 150 mm in width × 2 mm in thickness, with a plurality of gas passageways formed on both sides, which were formed with grooves (recesses) having a depth of 0.5 mm and a width of 1 mm, and ribs (projections) having a width of 2 mm), which was heated to be 200°C. The die was transferred to a hydraulic press (manufactured by TANAKA KAME CO., LTD., clamping power: 200 tons), and was compressed with a pressure of 400 kg/cm² at 200°C. After the die was maintained at the same temperature for 20 seconds, it was taken out.

The size of the obtained molded product as a separator was 250 mm in length × 150 mm in width × 2 mm in thickness, and was provided with a plurality of gas passageways on both sides, which were formed with grooves (recesses) having a depth of 0.5 mm and a width of 1 mm, and ribs (projections) having a width of 2 mm. However, the grooves (recesses) and ribs (projections) lost their shapes significantly, and excellent transfer could not be achieved. Furthermore, the grooves (recesses) and the ribs (projections) differed in density; the ribs had a density of 1.80 g/cm³, while the grooves (recesses) had a density of 1.98 g/cm³, therefore causing a great deflection. This made the separator tend to crack, and hence made the separator unsuitable for practical use.

### Example 6

A solid polymer electrolyte fuel cell was produced employing a separator obtained in Example 1 of the present invention. A Nafion film (produced by El du Pont) was used as a solid polymer film, over whose both sides a carbon catalyst carrying platinum was applied. Carbon paper (manufactured by Toray Industries, Inc.) was bonded further on outer faces thereof by a usual method, so as to form gas diffusion layers. Thus, a MEA was produced. The MEAs and separators were laminated for 50 cells, and the laminate was fastened with a pressure of 10 kgf/cm² by means of end plates and fastening rods made of stainless steel, with charge collectors and insulation plates being interposed therebetween. Thus, a solid polymer electrolyte fuel cell was completed. Principal parts of the obtained solid polymer electrolyte fuel cell are as shown in FIGS. 4 and 5.

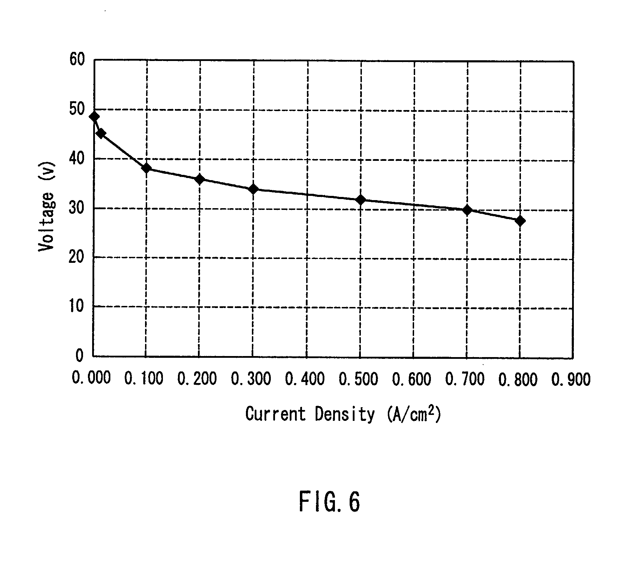

Hydrogen gas moisturized at 70°C was supplied to a fuel electrode of the solid polymer electrolyte fuel cell, while air moisturized at 60°C was supplied to an oxidizer electrode, and current-voltage characteristics were measured when the fuel utilization factor was 80% and the oxygen utilization factor was 40%. The results of measurement are shown in FIG. 6.

From the results, it was confirmed that the fuel cell according to the present invention exhibited excellent current-voltage characteristics.

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

## Claims

1. A fuel-cell separator that is formed with a mixture composition of a thermoplastic resin and graphite particles and that is provided with grooves for moving fluid, the fuel-cell separator having:
a gas permeability coefficient in a range of not less than 1×10⁻¹⁶ mol/m·Pa·s and not more than 1×10⁻¹⁴ mol/m·Pa·s;
a volume specific electric resistance in the thickness direction in a range of not less than 1 mΩ·cm and not more than 50 mΩ·cm; and
a density in a range of not less than 1.8 g/cm³ and not more than 2.1 g/cm³, the density being uniform throughout the grooves and ribs between the grooves.

2. The fuel-cell separator according to claim 1, wherein the thermoplastic resin is at least one resin selected from polyphenylene sulfide resins, polyarylate resins, polysulfone resins, polyether sulfone resins, polyphenylene ether resins, polyether ether ketone resins, polyolefin resins, polyester resins, polycarbonate resins, polystyrene resins, acrylic resins, polyamide resins, fluorocarbon resins, and liquid crystal polymers.

3. The fuel-cell separator according to claim 1 or 2, wherein a content of the thermoplastic resin contained in the mixture composition is not less than 10 percent by weight and not more than 30 percent by weight with respect to a total quantity of the graphite particles and the thermoplastic resin.

4. The fuel-cell separator according to claim 1, 2 or 3, which is in a flat plate shape and provided with gas passageways on both sides.

5. The fuel-cell separator according to any of claims 1 to 4, which is formed by being compressed uniformly in a molten state for forming and being cooled for molding.

6. The fuel-cell separator according to any of claims 1 to 5, having a density in a range of not less than 1.9 g/cm³ and not more than 2.0 g/cm³.

7. A method for producing the fuel-cell separator according to any one of claims 1 to 6, the method comprising the steps of:
(a) preheating a die to a temperature not lower than a melting point of the thermoplastic resin;
(b) filling the mixture composition into a cavity of the die;
(c) forming the mixture composition by compressing the same in a molten state uniformly at a predetermined pressure; and
(d) molding the mixture composition by cooling the same in the die to a temperature lower than a heat deflection temperature of the thermoplastic resin while the pressure remains applied thereto.

8. The method according to claim 7, wherein in the step (b), the mixture composition preheated to a temperature not lower than the melting point of the thermoplastic resin is filled in the cavity of the die.

9. The method according to claim 7 or 8, wherein the mixture composition is molded in a predetermined fuel-cell separator shape by transferring the die to the steps (a), (b), and (c) in the stated order successively.

10. A fuel cell incorporating the fuel-cell separator according to any one of claims 1 to 6, the fuel cell comprising:
membrane electrode assemblies (MEAs), each MEA having a polymer film, platinum-based catalyst layers on both sides of the polymer film, and diffusion layers provided on outer faces of the catalyst layers, the diffusion layers having gas permeability and electronic conductivity, and separators provided outside each of the MEAs.
